# EUROPEAN PATENT SPECIFICATION

(11) **EP 1 914 692 B1**
(45) Date of publication and mention of the grant of the patent: **24.04.2019**
(21) Application number: 07020357.5
(22) Date of filing: 18.10.2007
(51) Int. Cl.: G07F 7/02, G07F 7/10, H01R 13/70

(54) **Communication device holding systems and methods**
Systeme und Verfahren zum Halten einer Kommunikationsvorrichtung
Dispositif de communication portant des systèmes et des procédés

(30) Priority: 20.10.2006 US 551504
(43) Date of publication of application: 23.04.2008
(73) Proprietor: First Data Corporation, Greenwood Village, CO 80111 (US)
(72) Inventor: Nelson, Eric M., Waterloo, NE 68069 (US); Price, James, Alpharetta, GA 30004 (US); McCormack, Hugh, L., Winder, GA 30680 (US)
(74) Representative: Henseler, Daniela

(56) References cited:
- EP-A- 1 589 621
- US-A- 5 410 141
- US-A1- 2003 132 292
- US-A1- 2003 211 784
- US-A1- 2004 235 327
- US-A1- 2005 060 466
- US-A1- 2005 112 938
- US-A1- 2006 025 008
- US-B1- 6 875 023

## Description

The present invention relates to transaction systems, and more particularly to devices and methods that provide wireless connectivity for a transaction terminal.

A transaction system according to the preamble of claim 1 is known from US 2004/235327 A1. An internal connector including a carrying portion, a connecting portion, an elastic component and a second positioning component is disclosed. The connection portion is used to be connected with an insert card device and to slide between a first position and a second position. The elastic component moves the connecting portion to the first position or the second position. An inserting channel is disposed on the carrying portion for directing the insert card device to level at the connecting portion.

US 5 410 141 A relates to battery powered hand-held data entry terminals wherein a peripheral module may contain an automatically operating full image reader and a wireless communication unit. A light weight low cost basic terminal can be adapted for on-line RF communication with a host computer and selectively accommodate high throughput bar code scanners of the instant type.

From US 2005/112938 A1 a connection apparatus for a portable device is known. The connection apparatus includes a recess in a wall of the portable device for releasably receiving therein a connector and a connector cable; the connector cable having an inner end for permanent connection to internal circuitry of the portable device, and an outer end connected to the connector.

EP 1 589 621 A1 is directed to a USB connector converting device adapted for connecting a USB equipment having a USB plug to an external unit through a USB cable which is connected to the USB equipment having a first USB plug serving as data input/output interface to and from an external unit.

From US 2003/132292 A1 a transaction terminal is known which includes a housing, a touch screen, a card reader, an imaging module, and a decode circuit coupled to the imaging module. The transaction terminal can be coupled to a POS network.

US 2006/025008 A1 discloses a printer cable and an associated strain relief collar for creating a ruggedized connection for an electrical terminal of a printer.

US 6 875 023 B1 is directed to a data storage system that houses at least two mass storage devices in an enclosure, along with all interconnect cabling electronics to permit access through a shared universal-type interface.

US 2003/211784 A1 relates to an external USB adapter. The external USB adapter is an interface-converting apparatus, thereby externally installing a storage medium device or other peripheral components on a personal computer via a USB port of the personal computer.

US 2005/060466 A1 discloses a memory card for integrating the USB interface and an adaptor for the memory card. The memory card is to provide a memory chip inside a main body. Besides, a SD or MS control interface, a USB control interface, a controller, and a storage memory are built in the memory chip. The adaptor includes an insertion socket to be inserted in by a SD memory card or a MS memory card. The SD memory card and the MS memory card can also be inserted into the USB slot for expanding the application scope of the two memory cards. Thereby, from US 2005/060466 A1 an example for adding a peripheral device having different size to a transaction system is known.

In the sale of goods or services by a merchant to a customer, point-of-sale or point-of-service ("POS") devices are often used by the merchant to complete a transaction. Typically, such devices are connected to a host computer or processor via a wired network. However, the functionality of such devices can be limited in some instances, leading to undesirable inefficiency in certain commercial and retail environments. In many cases, transaction terminals do not provide a convenient solution for attaching useful peripheral equipment such as a wireless communication device or a memory stick. Accordingly, it may be difficult to move a POS device from one location to another or to use the device in various desired locations. Such limitations are sometimes present in currently used point-of-care ("POC") terminals as well.

For these and other reasons, there is a need for systems and methods that provide wireless connectivity and peripheral container solutions for a transaction terminal that overcome the limitations of currently used techniques. Hence, among a number of other advantages apparent from the following description, embodiments of the present invention provides systems and methods for addressing the aforementioned deficiencies of the current approaches.

Embodiments of the instant invention address these and other unfulfilled needs by providing systems, devices, and methods for conveniently and efficiently imparting wireless connectivity and other peripheral functions to a transaction terminal.

Transaction terminals, including point-of-sale terminals, point-of-service terminals, and point-of-care terminals typically require connectivity with a host or other computer system. Often, such connectivity is provided by a wired connection. In other cases, where connectivity is provided by an external wireless device, there may be no effective or convenient approach for attaching the wireless communication device to the transaction terminal.

It is therefore the object of the present invention to provide a transaction system and a method of providing wireless connectivity to a transaction terminal which is able to accommodate peripheral devices of various sizes in a transaction terminal.

This object is achieved by the features of claim 1 and 10, respectively.

Embodiments of the present invention provide housing and other support and containment elements for coupling a peripheral device, such as a wireless telephone or a memory stick, to a transaction terminal.

In a first aspect, embodiments of the present invention provide a transaction system that includes a peripheral device, and a transaction terminal having a reader, a printer, a touch sensor, a liquid crystal display, a printed circuit board, and an enclosure. The transaction system also includes a housing removably attachable with the enclosure, and a cable having a first interface that couples with the peripheral device and a second interface that couples with the printed circuit board. The housing is configured to accomodate at least a portion of the peripheral device, and the peripheral device includes a wireless communication device or a memory device. In some aspects, the peripheral device can include a universal serial bus connector, and the first interface of the cable can include a universal serial bus port. In some aspects, the printer circuit board can include a five pin header, and the second interface of the cable can couple with the five pin header. A wireless communication device according to embodiments of the present invention can include a Wireless Fidelity device, a Bluetooth device, a Worldwide Interoperability for Microwave Access device, a General Packet Radio Service device, a Cellular Digital Packet Data device, a Code Division Multiple Access device, and the like. These devices can be configured to provide connectivity via their respective protocols. In some aspects, the housing includes a housing vent. The transaction system can also include a deformable holder assembly disposed within the housing, such that the deformable holder assembly is configured to support the peripheral device. The deformable holder assembly can include a holder assembly vent. In some aspects, the transaction terminal enclosure includes a bottom cover, and the housing is attachable to the bottom cover. The housing can be attached to a rearward portion of the bottom cover, and can tilt the rearward portion of the bottom cover upward by about 6 to 10 degrees. In some cases, the transaction system includes a point of sale system, a point of care system, or a point of service system.

In another aspect, embodiments of the present invention provide a method of providing wireless connectivity to a transaction terminal. The method includes providing a wireless communication device, providing a transaction terminal having a reader, a printer, a touch sensor, a liquid crystal display, a printed circuit board, and an enclosure, and coupling the wireless communication device with the printed circuit board via a cable. The method also includes placing the wireless communication device
within a housing, and attaching the housing with the enclosure of the transaction terminal. In some cases, the wireless communication device includes a universal serial bus connector, the cable includes a universal serial bus port, and coupling the wireless communication device with the printed circuit board includes attaching the universal serial bus connector with the universal serial bus port. The printer circuit board can include a five pin header, and coupling the wireless communication device with the printed circuit board can include attaching the cable with the five pin header. The method can also include supporting the wireless communication device with a deformable holder disposed within the housing. In some cases, the method includes attaching the housing with the bottom cover, and may optionally include tilting a rearward portion of the bottom cover upward by about 6 to 10 degrees. In yet another aspect, embodiments of the present invention provide a system for coupling a peripheral device with a transaction terminal. The system can include, for example, a housing configured to receive at least a portion of the peripheral device, and a cable comprising a printed circuit board interface and a peripheral device interface.

A further understanding of the nature and advantages of the present invention may be realized by reference to the detailed description and claims when considered in connection with the drawings, wherein like reference numerals are used throughout the several drawings to refer to similar components. The drawings, which are not necessarily to scale, illustratively depict embodiments of the present invention and are not intended to limit the scope of the invention.
**Figure 1** illustrates a transaction terminal according to embodiments of the present invention.
**Figure 2** illustrates a transaction system according to embodiments of the present invention.
**Figure 3** illustrates a transaction system according to embodiments of the present invention.
**Figure 4** illustrates a transaction system according to embodiments of the present invention.
**Figure 5** illustrates a transaction system according to embodiments of the present invention.

Embodiments of the present invention provide housing and support elements for containing or holding a peripheral device relative to a transaction terminal. Often, such peripheral devices are configured to supply the transaction terminal with wireless connectivity to a wireless network or device.

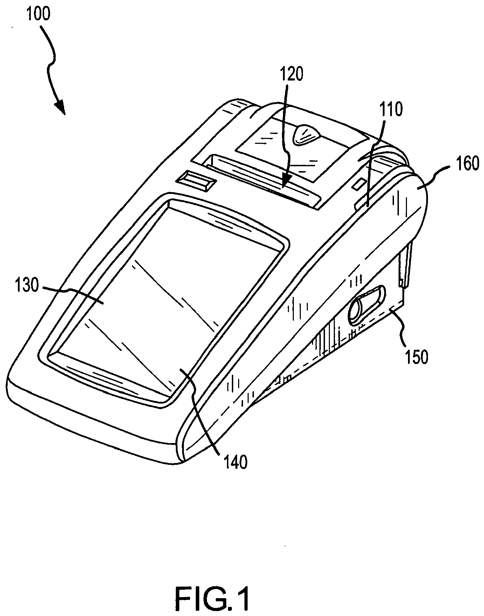

Turning now to the drawings, **FIG. 1** shows a transaction terminal 100 according to embodiments of the present invention. Transaction terminal 100 includes a reader 110, a printer 120, a touch sensor 130, a liquid crystal display 140, a printed circuit board 150, and an enclosure 160. Reader 110 can be configured to read any of a variety of presentation instruments, including credit cards, debit cards, transaction cards, ATM cards, bank cards, stored value cards, gift cards, healthcare cards, and the like. Printer 120 may includes a chassis, a hinge and a paper cover assembly as described in U.S. Provisional Patent Application No. 60/747,362.

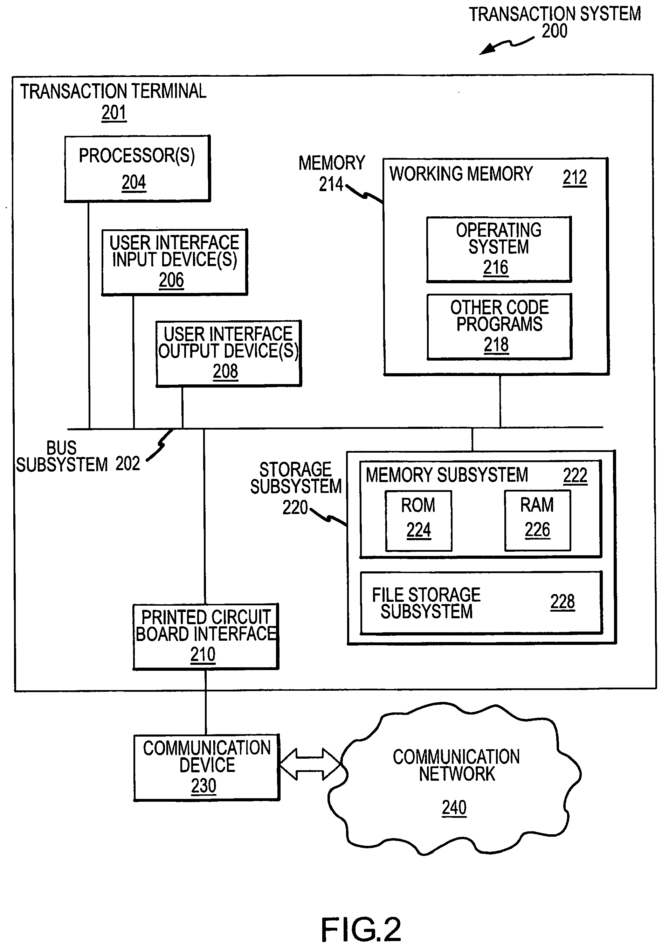

**FIG. 2** is a simplified block diagram of an exemplary computer system that broadly illustrates how individual system elements for a transaction system 200 may be implemented in a separated or more integrated manner. Transaction system 200 includes a transaction terminal 201, which is shown comprised of hardware elements that are electrically coupled via a bus subsystem 202, including one or more processors 204, one or more input devices 206 such as user interface input devices, one or more output devices 208 such as user interface output devices, and a printed circuit board interface 210. In some embodiments transaction system 200 also comprises software elements, shown as being currently located within working memory 212 of memory 214, including an operating system 216 and other code 218, such as a program designed to implement methods of the invention.

Likewise, in some embodiments transaction system 200 may also include a storage subsystem 220 that can store the basic programming and data constructs that provide the functionality of the various embodiments of the present invention. For example, software modules implementing the functionality of the methods of the present invention, as described herein, may be stored in storage subsystem 220. These software modules are generally executed by the one or more processors 204. In a distributed environment, the software modules may be stored on a plurality of computer systems and executed by processors of the plurality of computer systems. Storage subsystem 220 can include memory subsystem 222 and file storage subsystem 228. Memory subsystem 222 may include a number of memories including a main random access memory (RAM) 226 for storage of instructions and data during program execution and a read only memory (ROM) 224 in which fixed instructions are stored. File storage subsystem 228 can provide persistent (non-volatile) storage for program and data files, and may include tangible storage media which may optionally embody merchant, customer, supplier, patient, provider, payer, or other transactional, healthcare, or financial data. File storage subsystem 228 may include a hard disk drive, a floppy disk drive along with associated removable media, a Compact Digital Read Only Memory (CD-ROM) drive, an optical drive, DVD, CD-R, CD-RW, solid-state removable memory, other removable media cartridges or disks, and the like. One or more of the drives may be located at remote locations on other connected computers at other sites coupled to transaction system 200. The modules implementing the functionality of the present invention may be stored by file storage subsystem 228. In some embodiments, the software or code will provide protocol to allow the transaction system 200 to communicate with communication network 230 via printed circuit board interface 210 and communication device 230.

It is appreciated that system 200 can be configured to carry out various methods of the present invention. For example, processor component or module 204 can be a microprocessor control module configured to receive financial or healthcare transaction signals from input device or module 206, and transmit financial or healthcare transaction signals to output device or module 208 and/or interface device or module 210. Each of the devices or modules of the present invention can include software modules on a computer readable medium that is processed by a processor, hardware modules, or any combination thereof. Any of a variety of commonly used platforms, such as Windows, Macintosh, and Unix, along with any of a variety of commonly used programming languages, may be used to implement the present invention.

User interface input devices 206 may include, for example, a touchpad, a keyboard, pointing devices such as a mouse, a trackball, a graphics tablet, a scanner, a joystick, a touchscreen incorporated into a display, audio input devices such as voice recognition systems, microphones, and other types of input devices. User input devices 206 may also download a computer executable code from a tangible storage media or from communication network 230, the code embodying any of the methods of the present invention. It will be appreciated that terminal software may be updated from time to time and downloaded to the terminal as appropriate. In general, use of the term "input device" is intended to include a variety of conventional and proprietary devices and ways to input information into transaction system 200.

User interface output devices 206 may include, for example, a display subsystem, a printer, a fax machine, or non-visual displays such as audio output devices. The display subsystem may be a cathode ray tube (CRT), a flat-panel device such as a liquid crystal display (LCD), a projection device, or the like. The display subsystem may also provide a non-visual display such as via audio output devices. In general, use of the term "output device" is intended to include a variety of conventional and proprietary devices and ways to output information from computer system 200 to a user.

Bus subsystem 202 provides a mechanism for letting the various components and subsystems of transaction system 200 communicate with each other as intended. The various subsystems and components of transaction system 200 need not be at the same physical location but may be distributed at various locations within a distributed network. Although bus subsystem 202 is shown schematically as a single bus, alternate embodiments of the bus subsystem may utilize multiple busses.

Printed circuit board interface 210 can provide an interface to an outside device such as communication device 230, which can in turn provide an interface to other outside networks and/or other devices. Outside communication network 230 can be configured to effect communications as needed with various entities. It thus receives an electronic packet from transaction system 200 and transmits any information as needed back to transaction system 200. In addition to providing such infrastructure communications links internal to the system, the communications network system 230 may also provide a connection to other networks such as the internet and may comprise a wired, wireless, modem, and/or other type of interfacing connection.

It will be apparent to those skilled in the art that substantial variations may be used in accordance with specific requirements. For example, customized hardware might also be used and/or particular elements might be implemented in hardware, software (including portable software, such as applets), or both. Further, connection to other computing devices such as network input/output devices may be employed. Transaction terminal system 200 itself can be of varying types including a computer terminal, a personal computer, a portable computer, a workstation, a network computer, or any other data processing system. Due to the ever-changing nature of computers and networks, the description of transaction system 200 depicted in **FIG. 2** is intended only as a specific example for purposes of illustrating one embodiment of the present invention. Many other configurations of transaction system 200 are possible having more or less components than the computer system depicted in **FIG. 2****.** Relatedly, any of the hardware and software components discussed above can be integrated with or configured to interface with other practice management systems used at merchant locations.

It is understood that a transaction terminal 201 according to embodiments of the present invention may include any element, configuration, or functionality of a point-of-sale, point-of-service, or point-of-care device as described in U.S. Patent Application Ser. Nos. 60/147,899, 09/634,901, 10/358,615, 10/116,686, 10/116,689, 10/116,891, 10/116,735, 11/153,218, and 11/370,202.

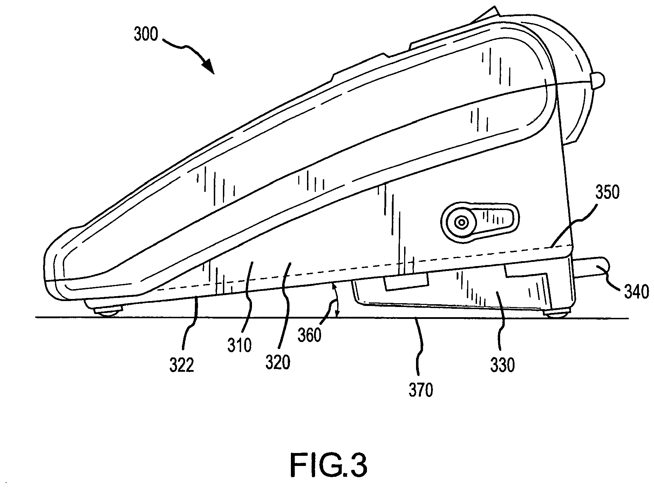

A transaction system 300 according to embodiments of the present invention is illustrated in **FIG. 3****.** Transaction system 300 includes a transaction terminal 310 and a housing 330. Transaction terminal 310 can include a enclosure 320 having a bottom cover 322, and a printed circuit board 350 disposed within enclosure 320. Transaction system 300 may also include a peripheral device 340, such as a wireless communication device, disposed at least partially within housing 330. As shown here, housing 330 can be attached with a rearward portion of bottom cover 322, so as to tilt the rearward portion of bottom cover 322 in an upward direction relative to a resting surface 370. In some embodiments, a tilt angle 360 is within a range from about 6 to 10 degrees. In some cases, the housing can be configured to tilt the transaction terminal any desired amount between 0 and 90 degrees. Typically, housing 330 and other elements disposed therein can act as a protective cover to contain or support peripheral device 340. Embodiments of the present invention encompass any of a variety of peripheral devices, including communication devices and memory devices. For example, a peripheral device can include a wireless communication device such as a Wireless Fidelity device, a Bluetooth device, a Worldwide Interoperability for Microwave Access device, a General Packet Radio Service device, a Cellular Digital Packet Data device, or a Code Division Multiple Access device. In some cases, the peripheral device includes a radio frequency device. Relatedly, a peripheral device can include a memory device such as a memory stick, a flash drive, a jump drive, a microdrive, a portable memory device, and the like. In some instances, the peripheral device includes or is integrated with a universal serial bus interface. Peripheral devices can be constructed for ease of transport, and may be configured as a keyfob or attached with a lanyard. In some embodiments, a peripheral device includes a wireless communication device in combination with a memory device.

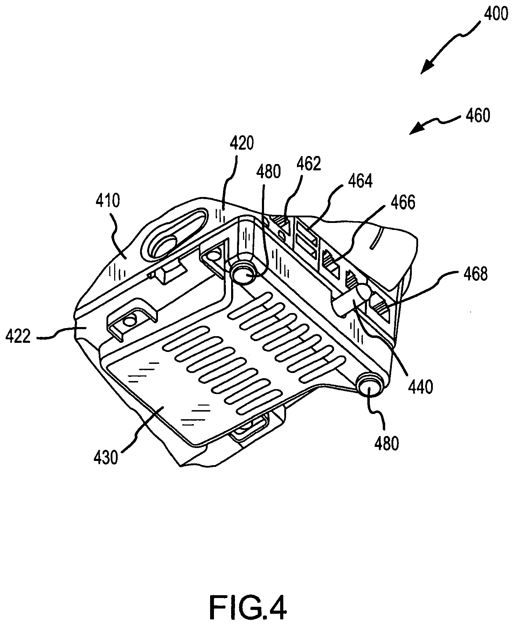

**FIG. 4** shows a transaction system 400 according to embodiments of the present invention. Transaction system 400 includes a transaction terminal 410 and a housing 430. Transaction terminal 410 can include a enclosure 420 having a bottom cover 422, and one or more interface connectors 460, such as a telco interface connector 462, a USB host interface connector 464, a COM interface connector 466, and an ethernet interface connector 468. In some cases, the terminal may include a USB mini connector. Transaction system 400 may also include a peripheral device 440, such as a wireless communication device or a portable memory device, disposed at least partially within housing 430. Housing can be manufactured from any desired material. In some cases, the housing includes ABS with UL 94V0. The housing can be configured for desired thermal distortion temperature characteristics, moisture resistance, density, hardness, dimension stability, impact strength, roughness, water absorption rate, chemical resistance, alkali and acidic resistance, weathering resistance, UL light resistance, and other material characteristics. Housing 430 can include a plurality of feet 480, which is some cases are manufactured from or include a rubber material. The feet can be configured to provide optimal or desired vibration absorbtion characteristics, coefficients of friction, wear resistance properties, and temperature resistance profiles. The feet can be made of IIR (butyl rubber), NBR (nitrile-butadiene rubber), and/or PCV (polyvinyl chloride). In some cases, the feet have a hardness of Shore A 60±5.

Transaction system 400 can be used to carry out any of a variety of financial or healthcare transactions. For example, a retailer such as Macy's® can provide a customer with a debit card or account number that is linked with the customer's checking account. When the customer shops at a Macy's® store or affiliate, a sales representative or the customer can swipe the customer's debit card, drivers license, or other personal identification instrument that is associated with the customer's debit card or account number through the reader of the transaction terminal. The transaction system can communicate over a variety of financial or healthcare networks in order to authorize and complete the transaction, including credit card networks, demand deposit account ("DDA") networks, private label networks, in store card enrollment networks, healthcare enrollment networks, and the like. For example, transaction system embodiments according to the present invention are well suited to support or execute debit transactions from demand deposit accounts as described in U.S. Patent Application Nos. 10/825,971, 10/825,960, and 10/825,950, all filed April 16, 2004.

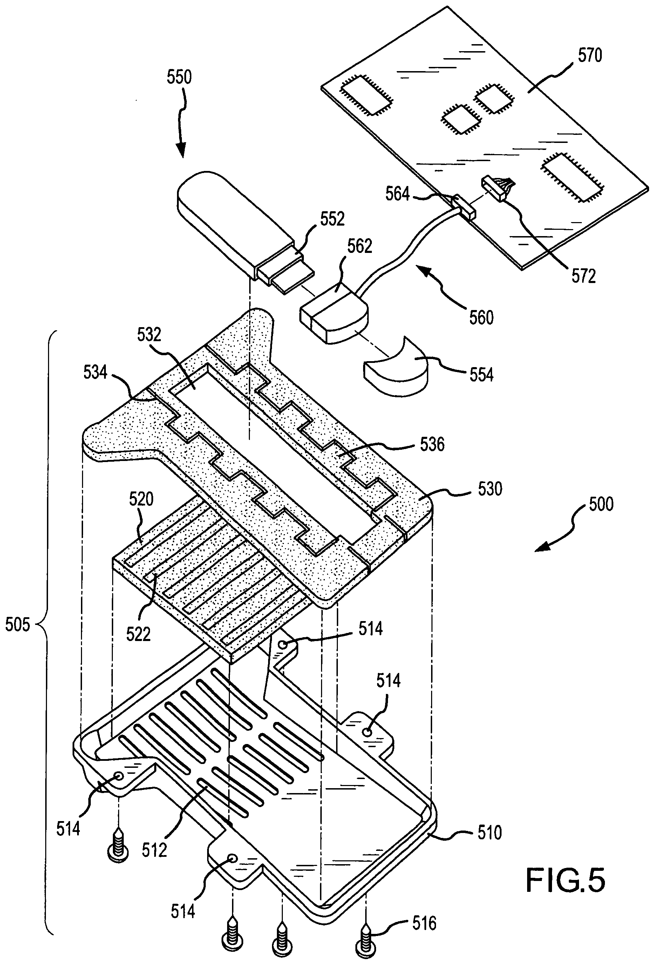

Components of a transaction system 500 according to embodiments of the present invention are depicted in **FIG. 5****.** Transaction system 500 includes a housing assembly 505, a peripheral device 550, and a cable 560. Housing assembly 500 includes a housing 510 having a plurality of vents 512, a plurality of feet (not shown), and a plurality of fastener apertures 514. Housing 510 can be coupled with an enclosure of a transaction terminal via any suitable fastener or fastening system, including screws, pins, nails, clips, snaps, and the like. As shown here, housing 510 can be coupled with transaction terminal enclosure via a plurality of fastener screws 516 that engage threaded inserts or surfaces in the bottom cover. Housing assembly also includes a first holder 520 and a second holder 530. First holder 520 includes a plurality of vents 522. Apertures or vents 512, 522 can allow heat to dissipate from the interior of housing assembly 500, as heat can be generated by a transaction terminal or peripheral device 550. Similarly, apertures or vents 512, 522 can allow for airflow through housing assembly 500. The first holder 520 is manufactured from or includes a deformable material and is a polyurethane foam. Second holder 530 includes a central aperture 532 and a plurality of precut sections 536 defined at least in part by scorings 534. Second holder 530 includes a tear away foam block that is prescored or precut into small pieces or cubes, which allow a user to customize the dimensions of the holder so as to accommodate communication devices of various sizes. Peripheral device 550, which may be a wireless communication device or a memory device such as a memory stick, includes a communication connection 552 such as a universal serial bus connection or port. Communication device 550 may also include a removable cap 554. Housing assembly 505 or components thereof can be configured for removable attachment with a transaction terminal enclosure. Similarly, housing assembly 505 or components thereof can be configured to receive or house at least a portion of a wireless communication device or other peripheral unit.

Cable 560 can include a first interface 562 that couples with the peripheral device 550 and a second interface 564 that couples with the printed circuit board 570. For example, cable 560 can include a communication port or connection 562 at one end, and a communication connection or port 564 at another end. Typically, communication connection or port 564 is configured for attachment with an interface or internal component of a transaction terminal. For example, communication connection 564 can be configured for attachment with a port or connection 572 of a printed circuit board 570 disposed within a transaction terminal. Relatedly, port 572 is often disposed at or near an aperture in an enclosure of the transaction terminal enclosure. In some cases, port or header 572 may include a detachable or disposable cover, which may be removed by the user prior to connecting the cable. For example, the header can be accessed by removing a disposable cover that is removably attached with the bottom cover. Communication port 562 can include, for example, a universal serial bus port or connection. Communication connection 564 can include, for example, a five pin connection configured for attachment with a five pin header or port of a printed circuit board. Any of a variety of connectivity means can be used to provide communication between the peripheral device 550 and the printed circuit board 570 or other transaction terminal component. In addition to universal serial bus connections and five pin connections, suitable modalities for connectivity include FireWire or IEEE 1394, WiFi, infrared, radio frequency, or other wired or wireless communication means.

## Claims

1. A transaction system (200, 300, 400, 500), comprising:
a peripheral device (340, 440, 550);
a transaction terminal (100, 201, 310, 410) comprising a printed circuit board (150, 350, 570), and an enclosure (160, 320, 420);
a housing (330, 430, 510) removably attachable with the enclosure (160, 320, 420), wherein the housing (330, 430, 510) is configured to accomodate at least a portion of the peripheral device (340, 440, 550); and
a cable (560) comprising a first interface (562) that couples with the peripheral device (340, 440, 550) and a second interface (564) that couples with the printed circuit board (150, 350, 570);
wherein the peripheral device (340, 440, 550) comprises a wireless communication device or a memory device,
**characterized in that**
the transaction terminal (100, 201, 310, 410) comprises a reader (110), a printer (120), a touch sensor (130) and a liquid crystal display (140), and
the transaction system (200, 300, 400, 500) further comprises a deformable holder assembly disposed within the housing (330, 430, 510), wherein the deformable holder assembly is configured to support the peripheral device (340, 440, 550) and comprises a first holder (520) and a second holder (530), wherein the first holder (520) comprises polyurethane foam and the second holder (530) includes a central aperture (532) and a plurality of precut sections (536) defined at least in part by scorings (534), whereby the second holder (530) includes a tear away foam block that is prescored or precut into small pieces or cubes, which allow a user to customize the dimensions of the second holder (530) for the accommodation of at least the portion of the peripheral device (340, 440, 550).

2. The transaction system (200, 300, 400, 500) according to claim 1, wherein the deformable holder assembly comprises a holder assembly vent (522).

3. The transaction system (200, 300, 400, 500) according to any of claims 1 to 2, wherein the peripheral device (340, 440, 550) comprises a universal serial bus connector, and the first interface (562) of the cable (560) comprises a universal serial bus port.

4. The system (200, 300, 400, 500) according to any of claims 1 to 3, wherein the printer circuit board (150, 350, 570) comprises a five pin header, and the second interface (564) of the cable (560) couples with the five pin header.

5. The transaction system (200, 300, 400, 500) according to any of claims 1 to 4, wherein the wireless communication device comprise a member selected from the group consisting of a Wireless Fidelity device, a Bluetooth device, a Worldwide Interoperability for Microwave Access device, a General Packet Radio Service device, a Cellular Digital Packet Data device, and a Code Division Multiple Access device.

6. The transaction system (200, 300, 400, 500) according to any of claims 1 to 5, wherein the housing (330, 430, 510) comprises a housing vent (512).

7. The transaction system (200, 300, 400, 500) according to any of claims 1 to 6, wherein the enclosure (160, 320, 420) comprises a bottom cover (322, 422), and the housing (330, 430, 510) is attachable to the bottom cover (322, 422).

8. The transaction system (200, 300, 400, 500) according to claim 7, wherein the housing (330, 430, 510) is attached to a rearward portion of the bottom cover (322, 422), and tilts the rearward portion of the bottom cover (322, 422) upward by about 6 to 10 degrees.

9. The transaction system (200, 300, 400, 500) according to any of claims 1 to 8, wherein the transaction system (200, 300, 400, 500) comprises a point of sale system, a point of care system, or a point of service system.

10. A method of providing wireless connectivity to a transaction terminal (100, 201, 310, 410), comprising:
providing a wireless communication device (340, 440, 550);
providing a transaction terminal (100, 201, 310, 410) comprising a reader (110), a printer (120), a touch sensor (130), a liquid crystal display (140), a printed circuit board (150, 350, 570), and an enclosure (160, 320, 420);
providing a housing (330, 430, 510) for attaching with the enclosure (160, 320, 420);
providing a cable (560) for coupling the wireless communication device (340, 440, 550) with the printed circuit board (150, 350, 570);
providing a deformable holder assembly for disposing within the housing (330, 430, 510) and comprising a first holder (520) and a second holder (530);
wherein the first holder (520) comprises polyurethane foam; and
wherein the second holder (530) includes a central aperture (532) and a plurality of precut sections (536) defined at least in part by scorings (534), whereby the second holder (530) includes a tear away foam block that is prescored or precut into small pieces or cubes, which allow a user to customize the dimensions of the second holder (530),
coupling the wireless communication device (340, 440, 550) with the printed circuit board (150, 350, 570) via the cable (560);
customizing the dimensions of the second holder (530) for accommodating partially the wireless communication device (340, 440, 550);
placing the wireless communication device (340, 440, 550) at least partially within the housing (330, 430, 510) whereby the wireless communication device (340, 440, 550) is supported with the customized deformable holder assembly within the housing (330, 430, 510); and
attaching the housing (330, 430, 510) with the enclosure (160, 320, 420) of the transaction terminal (100, 201, 310, 410).

11. The method according to claim 10, wherein the deformable holder assembly comprises a holder assembly vent (522).

12. The method according to any of claims 10 to 11, wherein the wireless communication device comprises a universal serial bus connector, the cable (560) comprises a universal serial bus port, and coupling the wireless communication device with the printed circuit board (150, 350, 570) comprises attaching the universal serial bus connector with the universal serial bus port.

13. The method according to any of claims 10 to 12, wherein the printer circuit board (150, 350, 570) comprises a five pin header, and coupling the wireless communication device with the printed circuit board (150, 350, 570) comprises attaching the cable (560) with the five pin header.

14. The method according to any of claims 10 to 13, wherein the wireless communication device comprise a member selected from the group consisting of a Wireless Fidelity device, a Bluetooth device, a Worldwide Interoperability for Microwave Access device, a General Packet Radio Service device, a Cellular Digital Packet Data device, and a Code Division Multiple Access device.

15. The method according to any of claims 10 to 14, wherein the housing (330, 430, 510) comprises a housing vent (512).

16. The method according to any of claims 10 to 15, wherein the transaction terminal enclosure comprises a bottom cover (322, 422), further comprising attaching the housing (330, 430, 510) with the bottom cover (322, 422).

17. The method according to claim 16, wherein attaching the housing (330, 430, 510) with the bottom cover (322, 422) comprises tilting a rearward portion of the bottom cover (322, 422) upward by about 6 to 10 degrees.

18. The method according to any of claims 10 to 17, wherein the transaction system (200, 300, 400, 500) comprises a point of sale system, a point of care system, or a point of service system.

## Patentansprüche

1. Transaktionssystem (200, 300, 400, 500), umfassend:
eine Peripherievorrichtung (340, 440, 550);
ein Transaktionsterminal (100, 201, 310, 410), umfassend eine Leiterplatte (150, 350, 570) und eine Einfassung (160, 320, 420);
ein Gehäuse (330, 430, 510), das an der Einfassung (160, 320, 420) abnehmbar befestigbar ist, wobei das Gehäuse (330, 430, 510) konfiguriert ist, um mindestens einen Teil der Peripherievorrichtung (340, 440, 550) aufzunehmen; und
ein Kabel (560), umfassend eine erste Schnittstelle (562), die mit der Peripherievorrichtung (340, 440, 550) koppelt, und eine zweite Schnittstelle (564), die mit der Leiterplatte (150, 350, 570) koppelt;
wobei die Peripherievorrichtung (340, 440, 550) eine drahtlose Kommunikationsvorrichtung oder eine Speichereinrichtung umfasst,
**dadurch gekennzeichnet, dass**
das Transaktionsterminal (100, 201, 310, 410) ein Lesegerät (110), einen Drucker (120), einen Berührungssensor (130) und ein Flüssigkristalldisplay (140) umfasst, und
das Transaktionssystem (200, 300, 400, 500) ferner eine verformbare Halteanordnung umfasst, die im Gehäuse (330, 430, 510) angeordnet ist, wobei die verformbare Halteanordnung konfiguriert ist, um die Peripherievorrichtung (340, 440, 550) zu tragen, und eine erste Haltevorrichtung (520) und eine zweite Haltevorrichtung (530) umfasst, wobei die erste Haltevorrichtung (520) Polyurethanschaum umfasst und die zweite Haltevorrichtung (530) eine mittige Öffnung (532) und mehrere vorgeschnittene Abschnitte (536) aufweist, die mindestens teilweise durch Riefen (534) festgelegt sind, wobei die zweite Haltevorrichtung (530) einen abreißbaren Schaumblock enthält, der in kleine Stücke oder Würfel vorgekerbt oder vorgeschnitten ist, die einem Benutzer ermöglichen, die Abmessungen der zweiten Haltevorrichtung (530) zur Aufnahme mindestens des Teils der Peripherievorrichtung (340, 440, 550) anzupassen.

2. Transaktionssystem (200, 300, 400, 500) nach Anspruch 1, wobei die verformbare Halteanordnung eine Halteanordnungsentlüftung (522) umfasst.

3. Transaktionssystem (200, 300, 400, 500) nach einem der Ansprüche 1 bis 2, wobei die Peripherievorrichtung (340, 440, 550) einen universellen seriellen Busverbinder umfasst und die erste Schnittstelle (562) des Kabels (560) einen universellen seriellen Busanschluss umfasst.

4. System (200, 300, 400, 500) nach einem der Ansprüche 1 bis 3, wobei die Leiterplatte (150, 350, 570) eine fünfpolige Stiftleiste umfasst und die zweite Schnittstelle (564) des Kabels (560) mit der fünfpoligen Stiftleiste gekoppelt ist.

5. Transaktionssystem (200, 300, 400, 500) nach einem der Ansprüche 1 bis 4, wobei die drahtlose Kommunikationseinrichtung ein Element umfasst, das aus der Gruppe ausgewählt ist, die aus einer WiFi-Einrichtung, einer Bluetooth-Einrichtung, einer WiMAX-Einrichtung, einer GPRS-Einrichtung, einer CDPD-Einrichtung und einer CDMA-Einrichtung besteht.

6. Transaktionssystem (200, 300, 400, 500) nach einem der Ansprüche 1 bis 5, wobei das Gehäuse (330, 430, 510) eine Gehäuseentlüftung (512) umfasst.

7. Transaktionssystem (200, 300, 400, 500) nach einem der Ansprüche 1 bis 6, wobei die Einfassung (160, 320, 420) eine Bodenabdeckung (322, 422) umfasst und das Gehäuse (330, 430, 510) an der Bodenabdeckung (322, 422) befestigbar ist.

8. Transaktionssystem (200, 300, 400, 500) nach Anspruch 7, wobei das Gehäuse (330, 430, 510) an einem rückwärtigen Teil der Bodenabdeckung (322, 422) befestigt ist und den rückwärtigen Teil der Bodenabdeckung (322, 422) um etwa 6 bis 10 Grad nach oben kippt.

9. Transaktionssystem (200, 300, 400, 500) nach einem der Ansprüche 1 bis 8, wobei das Transaktionssystem (200, 300, 400, 500) ein Point-of-Sale-System, ein Point-of-Care-System oder ein Point-of-Service-System umfasst.

10. Verfahren zum Bereitstellen einer drahtlosen Verbindung mit einem Transaktionsterminal (100, 201, 310, 410), umfassend:
Bereitstellen einer drahtlosen Kommunikationseinrichtung (340, 440, 550);
Bereitstellen eines Transaktionsterminals (100, 201, 310, 410), umfassend ein Lesegerät (110), einen Drucker (120), einen Berührungssensor (130), ein Flüssigkristalldisplay (140), eine Leiterplatte (150, 350, 570) und eine Einfassung (160, 320, 420);
Bereitstellen eines Gehäuses (330, 430, 510), zur Befestigung an der Einfassung (160, 320, 420);
Bereitstellen eines Kabels (560), zum Koppeln der drahtlosen Kommunikationseinrichtung (340, 440, 550) mit der Leiterplatte (150, 350, 570);
Bereitstellen einer verformbaren Halteanordnung zum Anordnen im Gehäuse (330, 430, 510), die eine erste Haltevorrichtung (520) und eine zweite Haltevorrichtung (530) umfasst;
wobei die erste Haltevorrichtung (520) Polyurethanschaum umfasst; und
wobei die zweite Haltevorrichtung (530) eine mittige Öffnung (532) und mehrere vorgeschnittene Abschnitte (536) aufweist, die mindestens teilweise durch Riefen (534) festgelegt sind, wobei die zweite Haltevorrichtung (530) einen abreißbaren Schaumblock umfasst, der in kleine Stücke oder Würfel vorgekerbt oder vorgeschnitten ist, die einem Benutzer ermöglichen, die Abmessungen der zweiten Haltevorrichtung (530) anzupassen,
Koppeln der drahtlosen Kommunikationseinrichtung (340, 440, 550) mit der Leiterplatte (150, 350, 570) über das Kabel (560);
Anpassen der Abmessungen der zweiten Haltevorrichtung (530) zum teilweisen Aufnehmen der drahtlosen Kommunikationseinrichtung (340, 440, 550);
Platzieren der drahtlosen Kommunikationseinrichtung (340, 440, 550) mindestens teilweise innerhalb des Gehäuses (330, 430, 510), wobei die drahtlose Kommunikationseinrichtung (340, 440, 550) mit der angepassten verformbaren Halteanordnung im Gehäuse (330, 430, 510) gelagert wird; und
Befestigen des Gehäuses (330, 430, 510) an der Einfassung (160, 320, 420) des Transaktionsterminals (100, 201, 310, 410).

11. Verfahren nach Anspruch 10, wobei die verformbare Halteanordnung eine Halteanordnungsentlüftung (522) umfasst.

12. Verfahren nach einem der Ansprüche 10 bis 11, wobei die drahtlose Kommunikationseinrichtung einen universellen seriellen Busverbinder umfasst, das Kabel (560) einen universellen seriellen Busanschluss umfasst und das Koppeln der drahtlosen Kommunikationseinrichtung mit der Leiterplatte (150, 350, 570) das Befestigen des universellen seriellen Busverbinders mit dem universtellen seriellen Busanschluss umfasst.

13. Verfahren nach einem der Ansprüche 10 bis 12, wobei die Leiterplatte (150, 350, 570) eine fünfpolige Stiftleiste umfasst und das Koppeln der drahtlosen Kommunikationseinrichtung mit der Leiterplatte (150, 350, 570) das Befestigen des Kabels (560) mit der fünfpoligen Stiftleiste umfasst.

14. Verfahren nach einem der Ansprüche 10 bis 13, wobei die drahtlose Kommunikationseinrichtung ein Element umfasst, das aus der Gruppe ausgewählt ist, die aus einer WiFi-Einrichtung, einer Bluetooth-Einrichtung, einer WiMAX-Einrichtung, einer GPRS-Einrichtung, einer CDPD-Einrichtung und einer CDMA-Einrichtung besteht.

15. Verfahren nach einem der Ansprüche 10 bis 14, wobei das Gehäuse (330, 430, 510) eine Gehäuseentlüftung (512) umfasst.

16. Verfahren nach einem der Ansprüche 10 bis 15, wobei die Einfassung des Transaktionsterminals eine Bodenabdeckung (322, 422) umfasst, und das ferner das Befestigen des Gehäuses (330, 430, 510) an der Bodenabdeckung (322, 422) umfasst.

17. Verfahren nach Anspruch 16, wobei das Befestigen des Gehäuses (330, 430, 510) an der Bodenabdeckung (322, 422) das Kippen eines rückwärtigen Teils der Bodenabdeckung (322, 422) um etwa 6 bis 10 Grad nach oben umfasst.

18. Verfahren nach einem der Ansprüche 10 bis 17, wobei das Transaktionssystem (200, 300, 400, 500) ein Point-of-Sale-System, ein Point-of-Care-System oder ein Point-of-Service-System umfasst.

## Revendications

1. Système de transaction (200, 300, 400, 500), comprenant:
un dispositif périphérique (340, 440, 550);
un terminal de transaction (100, 201, 310, 410) comprenant une carte de circuit imprimé (150, 350, 570), et une enceinte (160, 320, 420);
un logement (330, 430, 510) pouvant être fixé de manière amovible à l'enceinte (160, 320, 420), dans lequel le logement (330, 430, 510) est configuré pour accueillir au moins une portion du dispositif périphérique (340, 440, 550); et
un câble (560) comprenant une première interface (562) qui se couple au dispositif périphérique (340, 440, 550) et une seconde interface (564) qui se couple à la carte de circuit imprimé (150, 350, 570);
dans lequel le dispositif périphérique (340, 440, 550) comprend un dispositif de communication sans fil ou un dispositif de mémoire,
**caractérisé en ce que**
le terminal de transaction (100, 201, 310, 410) comprend un lecteur (110), une imprimante (120), un capteur tactile (130) et un afficheur à cristaux liquides (140), et
le système de transaction (200, 300, 400, 500) comprend en outre un ensemble support déformable disposé au sein du logement (330, 430, 510), dans lequel l'ensemble support déformable est configuré pour supporter le dispositif périphérique (340, 440, 550) et comprend un premier support (520) et un second support (530), dans lequel le premier support (520) comprend une mousse de polyuréthane et le second support (530) inclut une ouverture centrale (532) et une pluralité de sections prédécoupées (536) définies au moins en partie par des entailles (534), moyennant quoi le second support (530) inclut un bloc mousse déchirable qui est préentaillé ou prédécoupé en petites pièces ou petits cubes, qui permettent à un utilisateur d'adapter les dimensions du second support (530) pour l'accueil d'au moins la portion du dispositif périphérique (340, 440, 550).

2. Système de transaction (200, 300, 400, 500) selon la revendication 1, dans lequel l'ensemble support déformable comprend un évent d'ensemble support (522).

3. Système de transaction (200, 300, 400, 500) selon l'une quelconque des revendications 1 et 2, dans lequel le dispositif périphérique (340, 440, 550) comprend un connecteur de bus en série universel, et la première interface (562) du câble (560) comprend un port de bus en série universel.

4. Système (200, 300, 400, 500) selon l'une quelconque des revendications 1 à 3, dans lequel la carte de circuit imprimé (150, 350, 570) comprend une embase à cinq broches, et la seconde interface (564) du câble (560) se couple à l'embase à cinq broches.

5. Système de transaction (200, 300, 400, 500) selon l'une quelconque des revendications 1 à 4, dans lequel le dispositif de communication sans fil comprend un élément choisi dans le groupe consistant en un dispositif WiFi, un dispositif Bluetooth, un dispositif WiMAX (interopérabilité mondiale des accès d'hyperfréquences), un dispositif GPRS (service général de radiocommunication par paquets), un dispositif CDPD (transmission de données par paquets sur réseau cellulaire), et un dispositif AMRC (accès multiple par répartition en code).

6. Système de transaction (200, 300, 400, 500) selon l'une quelconque des revendications 1 à 5, dans lequel le logement (330, 430, 510) comprend un évent de logement (512).

7. Système de transaction (200, 300, 400, 500) selon l'une quelconque des revendications 1 à 6, dans lequel l'enceinte (160, 320, 420) comprend un couvercle de fond (322, 422), et le logement (330, 430, 510) peut être fixé au couvercle de fond (322, 422).

8. Système de transaction (200, 300, 400, 500) selon la revendication 7, dans lequel le logement (330, 430, 510) est fixé à une portion arrière du couvercle de fond (322, 422), et incline la portion arrière du couvercle de fond (322, 422) vers le haut d'environ 6 à 10 degrés.

9. Système de transaction (200, 300, 400, 500) selon l'une quelconque des revendications 1 à 8, dans lequel le système de transaction (200, 300, 400, 500) comprend un système de point de vente, un système de point d'intervention, ou un système de point de service.

10. Procédé de fourniture d'une connectivité sans fil à un terminal de transaction (100, 201, 310, 410), comprenant:
la fourniture d'un dispositif de communication sans fil (340, 440, 550);
la fourniture d'un terminal de transaction (100, 201, 310, 410) comprenant un lecteur (110), une imprimante (120), un capteur tactile (130), un afficheur à cristaux liquides (140), une carte de circuit imprimé (150, 350, 570) et une enceinte (160, 320, 420);
la fourniture d'un logement (330, 430, 510) pour fixer à l'enceinte (160, 320, 420);
la fourniture d'un câble (560) pour coupler le dispositif de communication sans fil (340, 440, 550) avec la carte de circuit imprimé (150, 350, 570);
la fourniture d'un ensemble support déformable pour disposer au sein du logement (330, 430, 510) et comprenant un premier support (520) et un second support (530);
dans lequel le premier support (520) comprend une mousse de polyuréthane; et
dans lequel le second support (530) inclut une ouverture centrale (532) et une pluralité de sections prédécoupées (536) définies au moins en partie par des entailles (534), moyennant quoi le second support (530) inclut un bloc mousse déchirable qui est préentaillé ou prédécoupé en petites pièces ou petits cubes, qui permettent à un utilisateur d'adapter les dimensions du second support (530),
le couplage du dispositif de communication sans fil (340, 440, 550) à la carte de circuit imprimé (150, 350, 570) via le câble (560);
l'adaptation des dimensions du second support (530) pour accueillir partiellement le dispositif de communication sans fil (340, 440, 550);
le placement du dispositif de communication sans fil (340, 440, 550) au moins partiellement au sein du logement (330, 430, 510), moyennant quoi le dispositif de communication sans fil (340, 440, 550) est supporté par l'ensemble support déformable adapté au sein du logement (330, 430, 510); et
la fixation du logement (330, 430, 510) à l'enceinte (160, 320, 420) du terminal de transaction (100, 201, 310, 410).

11. Procédé selon la revendication 10, dans lequel l'ensemble support déformable comprend un évent d'ensemble support (522).

12. Procédé selon l'une quelconque des revendications 10 et 11, dans lequel le dispositif de communication sans fil comprend un connecteur de bus en série universel, le câble (560) comprend un port de bus en série universel, et le couplage du dispositif de communication sans fil à la carte de circuit imprimé (150, 350, 570) comprend la fixation du connecteur de bus en série universel au port de bus en série universel.

13. Procédé selon l'une quelconque des revendications 10 à 12, dans lequel la carte de circuit imprimé (150, 350, 570) comprend une embase à cinq broches, et le couplage du dispositif de communication sans fil à la carte de circuit imprimé (150, 350, 570) comprend la fixation du câble (560) à l'embase à cinq broches.

14. Procédé selon l'une quelconque des revendications 10 à 13, dans lequel le dispositif de communication sans fil comprend un élément choisi dans le groupe consistant en un dispositif WiFi, un dispositif Bluetooth, un dispositif WiMAX (interopérabilité mondiale des accès d'hyperfréquences), un dispositif GPRS (service général de radiocommunication par paquets), un dispositif CDPD (transmission de données par paquets sur réseau cellulaire), et un dispositif AMRC (accès multiple par répartition en code).

15. Procédé selon l'une quelconque des revendications 10 à 14, dans lequel le logement (330, 430, 510) comprend un évent de logement (512).

16. Procédé selon l'une quelconque des revendications 10 à 15, dans lequel l'enceinte du terminal de transaction comprend un couvercle de fond (322, 422), comprenant en outre la fixation du logement (330, 430, 510) au couvercle de fond (322, 422).

17. Procédé selon la revendication 16, dans lequel la fixation du logement (330, 430, 510) au couvercle de fond (322, 422) comprend l'inclinaison d'une portion arrière du couvercle de fond (322, 422) vers le haut d'environ 6 à 10 degrés.

18. Procédé selon l'une quelconque des revendications 10 à 17, dans lequel le système de transaction (200, 300, 400, 500) comprend un système de point de vente, un système de point d'intervention, ou un système de point de service.
